# Europäisches Patentamt
# European Patent Office
# Office européen des brevets

(19)

(11) Publication number: **0 037 675**
**B1**

(12)

# EUROPEAN PATENT SPECIFICATION

(45) Date of publication of patent specification: **14.08.85**

(21) Application number: **81301256.4**

(22) Date of filing: **24.03.81**

(51) Int. Cl.⁴: **A 23 F 5/48,** A 23 L 1/22 // A23L2/40

(54) **Edible carriers for volatile components.**

(30) Priority: **09.04.80 US 138817**

(43) Date of publication of application:
**14.10.81 Bulletin 81/41**

(45) Publication of the grant of the patent:
**14.08.85 Bulletin 85/33**

(84) Designated Contracting States:
**AT BE CH DE FR GB IT LI LU NL SE**

(56) References cited:
**BE-A- 879 956**
**DE-A-2 820 081**
**DE-C- 837 913**
**FR-A-2 160 982**
**FR-A-2 438 432**
**GB-A-1 171 930**
**GB-A-1 273 298**
**US-A-3 573 060**
**US-A-3 823 241**
**US-A-4 057 652**

(73) Proprietor: **GENERAL FOODS CORPORATION**
**250 North Street**
**White Plains, N.Y. 10625 (US)**

(72) Inventor: **Saleeb, Fouad Zaki**
**15 Gregory Place**
**Pleasantville New York 10570 (US)**
Inventor: **Hudak, Stephen Francis**
**15 Hillside Avenue**
**Croton-on-Hudson New York 10520 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

### Technical field

This application relates to the use of water-soluble microporous particles for sorbing volatile compounds. The sorbed volatile will be slowly released from the microporous particles when the particles are placed in a sealed container, and, in this manner, an extended and consistent jar aroma may be obtained for food products such as soluble coffee powders. The sorbed volatiles can alternatively be rapidly released by contacting the particles with water which would be desirable in many instances, such as when a convenient source of carbon dioxide is desired.

### Background art

Soluble beverage powders such as spray dried vegetable extracts (e.g., coffee, tea, chicory) are relatively devoid of aroma as compared to their source or parent material—namely, roasted and ground coffee, fermented tea leaves and roasted chicory root. The same low aroma situation exists with dried fruit juices, such as freeze-dried orange juice, as compared to the natural fruit from which the juice is obtained. Low aroma intensity also exists in certain types of roasted coffee materials such as most decaffeinated coffees and the compressed roasted coffee materials described in U.S. Patent Nos. 1,903,362 to McKinnis, 3,615,667 to Joffe and 4,261,466 to Mahlmann et al. These low-aroma beverage products have an initially low quantity of aroma, such that upon the initial opening of the product by the consumer only low aroma impact is detected, and whatever amount of aroma is present in the product is rapidly given up after initial opening of the container, such that subsequent openings of the container during a typical in-use cycle for the product evolve little or no aroma.

It should be noted that the terms "coffee product" and/or "tea product" as used in this invention is meant to refer to not only those materials consisting of 100% coffee and/or tea but also to substitute or extended coffees or teas which may contain roasted grain, chicory and/or other vegetable materials alone or in combination with coffee and/or tea.

To date most efforts to add natural aroma to food products have focused on the addition of roasted coffee aroma to soluble coffees such as spray or freeze-dried coffee. Understandably then most of the disclosure of the present invention is directed to the aromatization of soluble coffee products; however, the application of this invention for the aromatization of other food products is specifically contemplated. Further, this invention may also be applied to any instance where it is desired to sorb a volatile component (either aromatic or non-aromatic) in an edible material.

At the present time, virtually all commercial soluble coffees are combined with coffee oil such as by spraying the soluble coffee prior to packaging with either a pure or an aroma-enriched coffee oil. In this manner the soluble coffee material will have an aroma more akin to non-decaffeinated roasted and ground coffee. The addition of oil is usually effected by the well-known oil plating technique (shown in U.S. Patent No. 3,148,070 to Mishkin et al.) or by oil injection (shown in U.S. Patent No. 3,769,032 to Lubsen et al.).

Coffee oil with or without added aromas has been the preferred medium employed to aromatize coffee material since such products could still be designated as being pure coffee; however, techniques developed for the production of coffee oil (see Sivetz, *Coffee Processing Technology,* Vol. 2, AVI Publishing Company, 1963, pages 21 to 30) such as solvent-extracting or expelling coffee oil from roasted coffee are not particularly desirable since the manufacturer is left with either solvent-containing roasted coffee or expelled cake, both of which must be either further processed or discarded. The addition of oil to a coffee product has also proven troublesome in that, undesirably, oil droplets can appear on the surface of the liquid beverage prepared from the oil-containing product. Thus, it would be advantageous if processes for aromatizing coffee products were developed which employed all coffee or other vegetable or edible materials, but which did not require the production or use of coffee oil or other glyceride material.

A method of aromatizing food products which does not have to rely on synthetic materials or chemical modification of natural materials would, of course, have applications in the food industry in addition to coffee and tea products. Powdered fruit juices, powdered fruit-flavored beverage concentrates and gelatin dessert mixes are but some of the possible applications. The use of expressed aromatic or essential oils, such as orange oil and lemon oil, as sources of aroma has been practiced in the food art, but the instability of these oils has limited their use. If the aromatics contained in these oils or elsewhere in a foodstuff material were capable of being held in a stable manner within natural edible materials, natural aromas could be incorporated into a multitude of food products. Further, if the aromatics could be added and retained at relatively high levels, then desirable flavor effects could also be obtained.

While the majority of the description presented herein relates to aromatizing coffee products; such a presentation is for convenience of description only and the invention is not meant to be limited thereby. As will be shown herein, this invention will also be applicable for sorption of non-aromatic volatiles such as carbon dioxide in order to produce a material which may be used to carbonate beverages.

### Disclosure of the invention

Water-soluble or water-dispersible particles of edible materials are obtained from aqueous solutions or dispersions of edible materials. These particles are prepared in such a manner that the particles possess a microporous structure such that the particles have a surface area in excess of 5 square meters per gram

($m^2/gm$) and a pore volume such that the volume contained in pores having a radius of less than 15 nm (150 Å) totals in excess of 5 microliters per gram (µl/gm). As it will usually be desired to maximize the ability of these particles to adsorb gaseous components higher surface areas and pore volumes will be preferred. Using the techniques disclosed in this invention, preferred surface areas in excess of 10, 20, 50 or 100 $m^2/gm$ may be produced. Preferred pore volumes in excess of 10, 20, 50 or 100 µl/gm are also obtainable according to this invention, and in the most preferred microporous structures this level of pore volume will be contained in pores having a radius of less than 110, 50 or 3.5 nm (35 Å).

For purposes of this invention, the term "micropore" is intended to mean a pore having a radius of 100 nm (1000 Å) or less, this being the generally accepted meaning within the art of surface chemistry. As recognized in the art, micropores are interconnected, internal spaces, typically of irregular shape; however, these micropores are viewed for purposes of most mathematical computations as being cylindrical in shape and having a quantifiable pore radius.

Of importance for purposes of this invention, as is the usual case for adsorbent materials such as molecular sieves, activated carbon and adsorption resins, are pores which have a radius of between about 0.3 and 15 nm (3 Å and 150 Å). A pore radius of less than about 0.3 nm (3 Å) is not desirable since such a small size would exclude molecules of the volatile compounds sought to be fixed within the microporous structure. Pore radii in excess of 15 nm (150 Å) do not provide sites for the capillary condensation of gaseous molecules. These larger micropores provide relatively small amounts of surface area in comparison to that provided by pores having less than 15 nm (150 Å) radius. Thus, in order to obtain surface areas in excess of 5 $m^2/gm$, it is necessary to have a microporous structure containing a substantial percentage of pores under 15 nm (150 Å).

The pore structure of the microporous particles of this invention can be determined from analysis of the adsorption-desorption isotherms of carbon dioxide or nitrogen gas on these particles at −78°C or −196°C, respectively, using an all-glass BET volumetric gas adsorption apparatus and following the procedures recognized by those skilled in the field of surface chemistry (Brunauer, S., "The Adsorption of Gases and Vapors" Vol. 1, Princeton Univ. Press, 1945). Normally one determines the adsorption isotherms first, by measuring the amounts of the gas adsorbed at various but successively increasing equilibrium pressures, and then reduces the pressure to obtain the desorption branch of the isotherm.

The isotherms are usually the result of ordinary multilayer adsorption and condensation in pores, in which case the Kelvin equation, which evaluates the lowering of the adsorbate vapor pressure due to the concavity of the liquid meniscus in the pore, can be applied. In its simple form and assuming a complete wetting of the surface (zero contact angle) the pore radius (r) is given by

$$ r = \frac{-2 \ \sigma \ V}{RT \ \ln P_d/P_o} $$

where σ is the surface tension of liquid sorbate, V is its molar volume, $P_d$ is the pressure at the desorption branch of the isotherm and $P_o$ is the saturated vapor pressure (760 mm Hg for $CO_2$ at −78°C and for $N_2$ at −196°C). The Kelvin equation shows that there is a logarithmic relationship between the pore radius and the relative pressure ($P_d/P_o$). Narrower pores fill at lower relative pressures, wider pores at higher pressures, and the entire pore space is filled at the saturation pressure. Further refinements of the Kelvin equation have to be applied to correct for gas adsorption which occurs simultaneously with gas condensation (Barrett, E. P., L. G. Joyner, P. P. Halenda; J. Amer. Chem. Soc. *73*, 373 (1951). Computation may be performed to obtain the relative pressures and hence gas volumes (V) adsorbed corresponding to selected pore radii (r). Plots of ΔV (cc/g)/Δr(Å) vs r (Å) provide pore volume distribution curves. The shape of these distribution curves reflect the uniformity or the spread of pores of different sizes in a given sample. The curves resemble typical probability curves (i.e., generally bell-shaped) with the abscissa corresponding to the maximum of the curve giving the main or most probable capillary or pore radius (i.e., the radius that occurs most frequently in the porous structure). The microporous particles contemplated for use in this invention will have a most frequently occurring radius of less than 15 nm (150 Å), preferably less than 5 nm (50 Å) and typically between 1 and 3.5 nm (10 and 35 Å).

The surface area attributable to any group of pores ($\Delta S_p$) is, by geometrical consideration, twice the pore volume of that group ($\Delta V_p$) divided by the average pore radius of the group (r̄); thus

$$ \Delta S_p = 2\Delta V_p/\bar{r} $$

The summation of the areas for all groups is the total surface area of the pores of the material tested. In actual practice, pore volumes, surface areas and pore volume distribution curves may be obtained from analytical equipment which provide fully automated BET System calculations. Such a unit is the Digisorb 2500, marketed by Micromeritics Instrument Corporation of Norcross, Georgia.

Among the aqueous solutions which can be used to prepare the dry particles of this invention are the aqueous extracts of vegetable materials such as coffee, chicory or grain (e.g., wheat) in either the roasted or unroasted state, or fermented tea, or the liquids obtained by expressing vegetable materials such as oranges, apples, grapes and the like. Other water-soluble, edible materials such as sugars (e.g., sucrose, lactose, etc.), sugar alcohols (e.g., mannitol, sorbitol, xylitol, etc.), hydrolyzed starches (e.g., dextrins, corn syrup solids, etc.) food acids and their salts, soluble gums, soluble proteins, synthetic or other intensive sweeteners (e.g., sodium saccharin, L-aspartyl-L-phenylalanine methyl ester) may also be used to produce these solutions. Of course combinations of any of the aforementioned soluble food materials may be employed such as the water-soluble solids obtained from a roasted mixture of wheat, wheat bran and molasses which is commercially available under the tradename Instant Postum®. Suitable aqueous dispersions can be prepared from water-dispersible gums, carbohydrates (e.g., starches), proteins and other edible materials which swell (i.e., hydrate) on contact with water.

Various techniques such as those hereinafter set forth will be available for producing particles having the desired microporous structure. Conventional spray drying of aqueous solutions or dispersions yields dry particles which do not possess a microporous structure. Conventional freeze drying of these liquids yields particles wherein the most probable pore radius is well in excess of 1000 nm (10,000 Å) Pores below 15 nm (150 Å) are necessary in order to sorb volatile components, such as carbon dioxide and volatile aromatic compounds, within the microporous structure of the dry particle. The sorbtion of volatile components by the dry particles of this invention is believed to be a result of both adsorption and more importantly, capillary condensation (i.e., the liquefaction of vapors in pores). The volatile components are held within the microporous structure without the necessity of any coating on the surface of the particles. A small percentage of these volatile components can, however, be released as a result of the slight partial pressure exerted by the trapped volatiles. Upon contact with water, the microporous structure will be destroyed and any volatile material contained therein will be released.

Volatiles sorbed by the microporous structures produced according to this invention are not permanently fixed within the pores in that if the loaded microporous particle is left exposed to the atmosphere, essentially all of the sorbed volatiles will eventually desorb and be lost. However, if the loaded particles are placed in a closed, preferably hermetically sealed, container, only so much of the sorbed volatiles will desorb as will produce an equilibrium partial vapor pressure within the container. Once such a condition is reached, further desorption does not occur. Thus, on opening of the container, the presence of any aromatic volatiles sorbed by the microporous particles can be perceived but substantially quantities of adsorbed volatiles will still be retained within the microporous structure. The retained aromatics will be of particular value when the food product to which the loaded particles are added is packaged in an amount that is not consumed at one time, such as a jar of soluble coffee or powdered soft drink. In this case, when the container is reclosed, another equilibrium condition will be established such that upon later reopening of the container, aromatic volatiles will again be perceived.

The phenomena of repeated controlled release of volatiles into the headspace of a packaged food product cannot be effected by means of such known adsorbents as activated carbon, which have surface areas on the order of 1000 m²/gm. Microporous particles having surface areas in excess of about 500 m²/gm will, because of an inherent pore size distribution consisting predominately of pores of about 1 nm (10 Å) or less in radius, retain sorbed volatiles to such a degree that successive generations of a headspace aroma do not occur. Thus, when controlled release of volatile for the generation of successive headspace aromas is sought, surface areas under 500 m²/gm are preferred.

Due to the large amount of volatiles which are able to be adsorbed by the microporous particles of this invention, it can be appreciated that a small, readily-ascertainable amount of aromatized microporous particles will be sufficient to provide a relatively consistent headspace aroma to a container over its entire in-use cycle. Should the aroma-loaded particles be used in an environment where the total food product is utilized at one time, retained aromatic volatiles will be useful to provide an aroma impact when the partially loaded particles are contacted with water and/or to provide a flavor impact as the food product is consumed.

It will, of course, be possible to adsorb nonaromatic volatiles (e.g., carbon dioxide) in the microporous particles of this invention. Loading these particles with carbon dioxide and thereafter hermetically packaging the loaded particles will provide a substrate which upon contact with water will provide a source of carbonation. If the $CO_2$-loaded particles are contacted with water, a carbonated liquid can be produced. It would also be possible to use the edible, microporous particles of this invention in an environment where adsorption of an undesirable aroma is sought. For these purposes, it will usually be preferred to maximize microporosity and surface area of the particles.

Several methods have been identified for producing microporous particles of edible material from aqueous solutions or dispersions such that the resulting dry particles contain a desirable microporous structure. These methods all seek to remove liquid water from the solution or dispersion such that microporous spaces are produced within the remaining solid materials Among these methods are:

(1) Spraying an aqueous solution and/or dispersion, preferably having a solids content less than 40% by weight, typically 20% to 35% by weight, directly into an excess of a cryogenic liquid having a temperature below −100°C, preferably liquid nitrogen, and subsequently, slowly freeze drying the frozen particles to produce dry microporous particles. The spray should preferably produce particles having an average particle size below about 0.2 mm (200 microns) in diameter so that the entire particle will be instantaneously frozen on contact with the cryogenic liquid. Spraying may be carried out using low pressure two fluid nozzles, high pressure hydraulic systems, or the like. The temperature of the aqueous liquid will usually be at or above ambient prior to spraying. It is believed that instantaneous freezing will

4

result in the formation of only minute ice crystals throughout the particle. Should the spray droplets exceed 0.2 mm (200 microns) in average diameter then, even at liquid nitrogen temperature the frozen particle will possess the desirably minute ice crystals only at its surface and not throughout its structure. Careful sublimation of these minute ice crystals will produce particles having the desirable microporous structure of this invention. As the occurrence of any meltback in the freeze-drying process can destroy much of the existing microporous structure, prolonged freeze-drying times are favored. Use of a cryogenic liquid having a temperature above −100°C has not been found to lead to particles having sufficient microporosity for purposes of this invention, regardless of the diameter of the spray droplets.

(2) Another method for producing the dry microporous particles is to spray the aqueous solution and/or dispersion (usually between 30 and 60% solids) into an anhydrous, water-miscible, organic solvent, such as methanol, ethanol, acetone and the like which process step will dehydrate the extract and form microporous spheres of soluble solids. The organic solvent will usually be at ambient temperature or below and the ratio of aqueous liquid to solvent will be on the order of 1:10 to 1:50. At the end of the spraying period, the dehydrated particles are allowed to settle and are then filtered and dried, such as in a vacuum oven, until the solvent is evaporated. Again, it will be preferred to produce or utilize particles which have an average diameter below 0.2 mm (200 microns) in order to provide sufficient surface area for the solvent to quickly remove water molecules and produce the desired microporous structure.

(3) When the aqueous liquid is in the form of a viscous solution or a dispersion (i.e., containing relatively insoluble but hydratable solids) it may be preferred to use a slab freezing technique as opposed to the spraying technique of method (1). Slab freezing can be accomplished by spreading a thin layer (about 3.2 mm or less) of the solution and/or dispersion on a metal tray and then pouring liquid nitrogen over this thin layer. Again, freeze drying of the frozen material would be done in a manner to preclude meltback.

Microporous particles can be produced according to this invention which are capable of sorbing volatile compounds at a level up to 10% or more by weight of the particles. Entrapment of volatiles at a level of less than about 0.1% by weight is generally of little interest as loadings at this level would require the use of a large amount of the loaded particles. When the microporous particles are to be loaded with volatile aromatics and added to a low-aroma food product, loadings below 0.1% would typically require the addition of loaded particles at a level of 5% or more by weight of the product. It will usually be preferred to add the aromatized particles at a level of less than about 2% by weight. When the aroma-loaded particles are to be dry-blended with a powdered food product, a particle level in excess of about 0.01% by weight will normally be employed. For use in low-aroma food products, the aromatized particles of this invention will typically contain aromatics at a level of 0.2% or more, typically about 0.5%. When the loaded particles are to be used solely as a source of the sorbed volatile (e.g., a source of $CO_2$ for carbonation purposes) high loadings (above 2% by weight, preferably above 5%) will generally be preferred.

The method of contacting the porous particles with volatiles for the purpose of entrapping them within the particles can be many and varied. The use of high pressure and/or low particle temperatures may be employed in order to maximize pick-up of volatiles or shorten the period of time required to achieve a desired level of loading; however, such conditions are not required. It will be desirable, however, to minimize the amount of moisture which comes into contact with the soluble porous particles both before, during and after loading. Suitable condensation, vaporization, sweeping and/or other separation techniques may be employed to separate the moisture and aromatics contained in any aroma-bearing gas streams, aroma frosts or liquid aroma condensates which might be used to contact the microporous particles. It may also be desirable to separate aromatics from any carrier gas (e.g. $CO_2$ in which they are entrained.

Among the techniques useful for loading aromatic volatiles onto the microporous substrates are: (1) placing both the porous particles and a condensed $CO_2$ aroma frost well-mixed in a vented vessel, preferably above −40°C, and permitting the $CO_2$ portion of the frost to sublime off, (2) enclosing both the adsorbent and a condensed aroma frost in one or two connected pressure vessels and then raising the temperature within the frost containing vessel to vaporize the frost and provide an elevated pressure, (3) combining a highly concentrated aqueous aroma condensate with the porous particles at a level at which it does not unduly moisten the particles, (4) condensing aromatics onto chilled porous particles, (5) passing a stream of aroma-bearing, low-moisture gas through a bed or column of porous particles.

Loading of $CO_2$ onto the microporous particles may be effected by contact with either gaseous or liquid $CO_2$. One convenient method would be the use of a packed column where a stream of gaseous or liquid $CO_2$ is passed through the column. Since a high loading will usually be desired, low temperatures (down to −78.5°C) and/or elevated pressures will be preferred.

The aromatics which may be used for this invention may be derived from any of the many sources well-known to those skilled in the art. Depending on the method of contact to be employed, the aromas may be present as a component of a gas, a liquid condensate or a condensed frost. Among the aromas which may be used to impart a coffee aroma are coffee oil aromas, as described in U.S. Patent No. 2,947,634 to Feldman et al., aromas obtained during the roasting of green coffee, as described in U.S. Patent No. 2,156,212 to Wendt, aromas obtained during the grinding of roasted coffee, as described in U.S. Patent No. 3,021,218 to Clinton et al., steam-distilled volatile aromas obtained from roasted and ground coffee, as described in U.S. Patent Nos. 2,562,206 to Nutting, 3,132,947 to Mahlmann, 3,244,521 to Clinton

**0 037 675**

et al. 3,421,901 to Mahlmann et al., 3,532,507 to Cascione and 3,615,665 to White et al., and the vacuum-distilled aromas obtained from roasted and ground coffee as described in U.S. Patent Nos. 2,680,687 to Lemonnier and 3,035,922 to Mook et al. Aromas contained in citrus oils, essential oils or other naturally occurring aromatic substances will also be useful. It would, of course, also be possible to employ volatile synthetic chemical compounds which duplicate or simulate the aromatic compounds naturally present in roasted coffee, fermented tea or other aromatic food products.

The volatiles adsorbed onto the microporous particles in accordance with this invention have been found to be stable during prolonged storage under inert conditions such as that normally existing in many packaged soluble food products. Adsorbed aromatic volatiles are able to produce desirable headspace aroma in packaged products and if present in sufficient quantity can also produce desirable flavor effects.

Best mode for carrying out the invention
Example 1

An aqueous coffee extract having a soluble solids content of 33% by weight was prepared by reconstituting spray dried coffee solids. This extract was sprayed into an open vessel containing liquid nitrogen whereupon the particles of extract immediately froze and were dispersed. The extract was sprayed by means of a two-fluid, glass atomizing nozzle (a chromatographic nozzle obtained from SGA Scientific, Inc.) using air as the pressurizing fluid. The liquid nitrogen and particle mixture was poured into freeze drier trays and the liquid nitrogen was allowed to boil-off leaving behind a flat bed of frozen particles about 1.6 to 3.2 millimeter thickness. The trays were placed in a freeze drier and subjected to a vacuum of 0.01 mm (10 microns) of Hg, and a plate temperature of 50°C for a period of 18 hours. The vacuum of the freeze drier was broken with dry $CO_2$ and the dry particles having a moisture content of below about 1.5% were removed from the freeze drier and kept out of contact with moisture. The dry particles are found to have a microporous structure containing pores having a most frequently occurring radius of about 2.4—2.8 nm (24—28 Å) (determination based on $CO_2$ adsorption-desorption isotherms), a surface area in excess of 5 m²/gm and a screen analysis as follows:

| Standard U.S. mesh # | % Wt. |
|---|---|
| on 80 | 7.5 |
| on 100 | 15.0 |
| on 200 | 67.3 |
| pan | 10.2 |

The dry particles were subsequently chilled in dry ice under a dry atmosphere and mixed with coffee grinder gas frost, having a moisture content between 10 and 15% by weight, at a weight ratio of 0.2 parts frost per part particle. The mixture was transferred to a prechilled jar having a pinhole vent and the jar was stored at 0°F overnight during which time $CO_2$ was evolved. the chilled particles, having a moisture content of below 6% by weight, were then packaged in glass jars with unplated, agglomerated spray dried coffee solids at the level of 0.75% by weight of spray dried solids. The resulting jars were then stored at 35°C (95°F) for periods of eight weeks. Upon initial opening and during a standard 7 day in-use cycle, a pleasing headspace aroma is found which is rated as being at least as good as the headspace aroma possessed by jars of comparably stored aromatized, agglomerated spray-dried coffee which coffee had been plated with grinder gas-enriched coffee oil. This oil-plated sample was prepared in accordance with U.S. Patent No. 4,119,736 to Howland et al., using an amount of grinder gas frost for each weight unit of soluble product comparable to that employed in the inventive sample.

Example 2

One hundred milliliters of a coffee extract containing 50% by weight soluble solids is sprayed by means of a glass chromatographic nozzle into a large beaker containing one gallon of pure ethanol. The ethanol was at room temperature and was stirred during the spraying operation. Thereafter particles of soluble coffee were filtered from the ethanol and these particles were put in a vacuum oven (63.3 mm Hg. vacuum and about 90°C) overnight to remove residual ethanol. The resulting particles are found (using $CO_2$ isotherms) to have a microporous structure wherein the most frequently occurring pore radius was 3.3 nm (33 Å) and the surface area is in excess of 5 m²/gm. The particles were kept out of contact with moisture and contacted with grinder gas frost at a level by weight of 0.2 parts frost to 1 part of particles in a Parr bomb heated to about 20°C. The resulting aromatized particles were combined and packaged with unplated and unaromatized spray dried coffee agglomerate at a level of about 0.5% by weight. The jar aroma possessed by this sample after one week storage at room temperature was found to be comparable to week-old, grinder gas-enriched, oil-plated agglomerate.

6

Example 3

Microporous particles of soluble coffee are prepared by freezing a thin layer (about 2 mm) of a decaffeinated coffee extract (33% solids) by direct contact with liquid nitrogen. The frozen slab is then ground and the particles are freeze dried, avoiding meltback, to yield particles having a microporous structure and a surface area of at least 5 $m^2$/gm. Soluble coffee extract is concentrated from 15% to 48% solids in a thin film evaporator. The evaporate is condensed at about 5°C and the noncondensible aromatics are fractionated to produce a moisture-free aroma which is then carried in a nitrogen gas carrier through a column of the microporous particles which is being held at −66.6°C. As measured by a gas chromatograph, essentially all of the aromatics entering the cooled columns are removed by the microporous particles and when a small sample of the aroma-loaded particles are sealed in a container, a noticeable aroma is generated in the container headspace.

Example 4

The microporous particles produced in accordance with Example 3 were also contacted with aromatics generated from a coffee oil aroma frost. Again it was found that the microporous particles were able to sorb aromatics and release the aromatics into the headspace of a closed container.

As previously noted, jar aroma has been provided to commercial soluble coffee products by means of oil plating an aroma-bearing glyceride (e.g. coffee oil) onto soluble powder. It has also been contemplated to absorb coffee aromatics onto oil plated soluble coffee and this technique is expressly disclosed in U.S. Patent No. 3,823,241 to Patel et al. It has, however, not previously been thought possible to absorb or adsorb high levels of aromatics directly onto soluble coffee solids such that the aromatics would be retained. The Patel et al. patent notes the criticality of the oil so that upon successive openings of the soluble coffee package (i.e., in-use cycle) the consumer will continue to perceive a jar aroma. This is in fact the situation for the conventional spray-dried, foam-dried and freeze-dried products dealt with in the Patel et al. patent. However, the same deficiency does not exist in porous soluble coffee particles having a most frequently occurring pore radius of less than 15 nm (150 Å).

As previously noted, conventional spray dried coffee does not possess a microporous structure; while in conventional freeze dried coffee, the most probable pore radius is on the order of 1000 nm (10,000 Å).

Example 5

Aqueous coffee extracts (33% solids) prepared by reconstituting decaffeinated soluble coffee was sprayed into liquid nitrogen at both high 20685 K Pa (3,000 psi) and low 345 K Pa (50 psi) pressure. The resulting particles were then freeze dried, avoiding any meltback, and evaluated for surface area and pore volume using the aforementioned Digisorb 2500 unit. The high pressure sample had a surface area of 126.8 $m^2$/gm and cummulative pore volumes of 98, 104, 117, 176 and 280 µl/gm at radii of 3.5, 4.0, 5.0, 10.0 and 15.0 nm (35, 40, 50, 100 and 150 Å) respectively. Comparable values for the low pressure sample were 39.9 $m^2$/gm and 23, 25, 29, 41 and 59 µl/gm.

Several samples of commercially-available, freeze-dried coffee were evaluated for surface area by krypton adsorption at liquid nitrogen temperature, a technique suitable for solids having a relatively low total surface area. The following values were obtained:

| Trade name | Country of origin | Surface area ($m^2$/gm) |
|---|---|---|
| Maxim® | US | 0.32 |
| Maxim® | Japan | 0.41 |
| Maxim® | Germany | 0.35 |
| Nescafe® | England | 0.26 |

Again, using krypton adsorption, several diverse edible materials were evaluated for surface area.

**0 037 675**

| Material | Surface area (m²/gm) |
|---|---|
| Sucrose (crystals) | 0.072 |
| 5DE corn syrup solids (Mor-rex) | 0.189 |
| Spray-dried, soluble chicory | 0.143 |
| Citrus pectin | 0.290 |
| Non-fat dry milk solids | 0.200 |

Example 6

Aqueous solutions (about 25% solids) of various edible materials were sprayed into an excess of liquid nitrogen using either a two-fluid nozzle, with nitrogen at a gage pressure of 344 K Pa (3.4 atm.) (atmosphere) as the spraying gas, or a core type nozzle, with an elevated hydraulic pressure. The resulting particles were freeze dried over seven days to avoid meltback and were analyzed for microporosity.

| Material | Spraying pressure (atm.) | (K Pa) | Surface area (m²/gm) | Pore volume r<150 Å (15.0 nm) (µl/gm) |
|---|---|---|---|---|
| Sucrose | 3.4 | 344 | 136.1 | 304 |
| Lactose | 170 | 17220 | 66.1 | 78 |
| 5DE Corn Syrup Solids (Mor-rex) | 3.4 | 344 | 195.1 | 360 |
| 42DE Corn Syrup Solids (Mor-sweet) | 3.4 | 344 | 86.5 | 108 |
| Roasted Chicory Extract | 3.4 | 344 | 72.6 | 127 |
| Roasted Wheat Extract | 3.4 | 344 | 151.1 | 336 |
| Tea Extract | 3.4 | 344 | 97.4 | 156 |
| Sodium Ascorbate | 3.4 | 344 | 32.8 | — |
| Gelatin (10% solids) | 3.4 | 344 | 103.3 | 73 |
| Non-Fat Dry Milk | 3.4 | 344 | 65.6 | 71 |
| Protein Miscelles* | 51 | 5170 | 22.3 | 21 |

*as described in Canadian Patent No. 1,028,552.

Example 7

Aqueous dispersions and/or viscous solutions of various edible materials having a solids concentration of 25% by weight were spread into 3.2 mm thick slabs on metal trays and fast frozen by pouring liquid nitrogen on them. These materials were then freeze dried in the manner of Example 4 and were analyzed for microporosity.

8

**0 037 675**

| Material | Surface area (m²/gm) | Pore volume r<150 Å (15.0 nm) (μl/gm) |
|---|---|---|
| Dried Barley Flakes | 21.7 | 26 |
| Carboxymethyl Cellulose | 52.1 | 84 |
| Low-Methoxy Pectin | 93.6 | 156 |
| High-Methoxy Pectin | 114.4 | — |
| Bovine Serum Albumin | 9.4 | 6 |

Example 8

Several of the microporous substrates produced in Examples 6 and 7 were contacted in a closed vessel with Valencia 5-fold terpeneless orange oil in order to evaluate their ability to sorb volatile aromatics. In actual practice, a measured volume of orange oil was injected through the septum of a bottle containing the adsorbent. After an overnight equilibration period at 30°C, a gas chromatographic headspace analysis is carried out and compared to a control bottle containing a like amount of orange oil but with no microporous substrate. The degree of adsorption will be evident from a ratio of the equilibrium headspace analysis in the presence or absence of the microporous adsorbent (P/Po). The lower the value of P/Po, the higher is the amount of volatiles adsorbed. If P/Po approaches 1.0, very little or no adsorption is taking place. This would be the condition when if the substrate contains no micropores, or if the micropore capacity is exceeded.

| Substrate | Aroma load (v/w) | P/Po (at 30°C) |
|---|---|---|
| 5DE Mor-rex® | 2.0 | 0.00 |
| 5DE Mor-rex® | 5.0 | 0.24 |
| 5DE Mor-rex® | 10.0 | 0.38 |
| 5DE Mor-rex® | 15.0 | 0.76 |
| 42DE Mor-sweet® | 5.0 | 0.30 |
| Dried Barley Flakes | 5.0 | 0.60 |
| Carboxymethyl Cellulose | 5.0 | 0.09 |
| Low-Methoxy Pectin | 5.0 | 0.05 |

Example 9

Microporous particles having a surface area in excess of 5 m²/g are prepared by spraying aqueous solution (25% solids) of various soluble food ingredients into liquid nitrogen and carefully freeze drying the resulting particles. Comparable microporous particles are prepared from aqueous starch dispersions by forming thin (3.2 mm) slabs of the dispersions, pouring liquid nitrogen on the slabs, and then carefully freeze drying the frozen materials. The porous particles are then placed in a closed vessel with $CO_2$ at conditions of −78°C and 500 mm Hg absolute pressure (unless otherwise noted in parentheses). The amount of $CO_2$ adsorbed (volumes adjusted to STP) by the microporous particles is set forth below.

9

# 0 037 675

| Material | CO$_2$ Adsorbed | |
|---|---|---|
| | (cc/g) | (wt. %) |
| Mannitol | 2.7 | 0.53 |
| Sucrose | 20.3 | 3.99 |
| Sucrose | 2.5 | 0.49 |
| (−18°C and 760 mm) | | |
| Lactose | 35.0 | 6.88 |
| 5DE Dextrin (Mor-rex)® | 14.0 | 2.75 |
| (−18°C and 760 mm) | | |
| 5DE Dextrin (Mor-rex)® | 38.4 | 7.55 |
| 10DE Dextrin (Mor-rex)® | 35.4 | 6.96 |
| | 26.5 | 5.21 |
| (−18°C and 4135 mm) | | |
| | 10.6 | 2.08 |
| (−18°C and 760 mm) | | |
| 42DE Corn Syrup Solids (Mor-sweet) | 28.4 | 5.59 |
| Potato Starch | 14.5 | 2.85 |
| Amioca Starch | 13.4 | 2.64 |
| Tapioca Starch | 7.3 | 1.44 |

Example 10

Two CO$_2$-loaded samples from Example 9 were utilized to carbonate water as follows: 5DE Mor-rex at −18°C and ambient pressure having a CO$_2$ loading of 14 cc/gm was combined with 2.2°C water in a closed vessel at a ratio of 8.5 gm solids per 25 cc of water. The resulting liquid is found to contain a carbonation level of 2.1±0.1 cc of CO$_2$ per cc of liquid. In the same manner, sucrose at −18°C and ambient pressure having a CO$_2$ loading of 2.5 cc/gm is combined with 2.2°C water at a ratio of 9 gms sugar per 30 cc of water. The resulting liquid attained a carbonation level of 0.6 cc of CO$_2$ per cc of liquid.

All of the microporous particles produced in accordance with this invention are able to sorb volatile compounds and condense these volatiles within their microporous structure.

**Claims for the Contracting States: BE CH DE FR GB IT LI LU NL SE**

1. Dry, water-soluble particles of an edible material characterized in that the particles thereof possess a surface area of from 20 to 500 square meters per gram and a microporous structure wherein the pore volume of micropores having a radius of less than 15 nm (150 Å) is in excess of 5 microliters per gram.

2. Particles according to claim 1 wherein the pore volume under 15 nm (150 Å) exceeds 20 microliters per gram.

3. Particles according to either of claims 1 or 2 wherein the pore volume under 5 nm (50 Å) exceeds 20 microliters per gram.

4. Particles according to any one of claims 1 to 3 wherein the edible material comprises soluble solids obtained from roasted coffee, from roasted chicory, from roasted wheat, a roasted blend of wheat and molasses, is a carbohydrate material selected from sugars, dextrins or corn syrup solids, or is a water dispersible gum, starch and/or protein.

5. Particles according to any one of claims 1 to 4 which contain volatile compounds at a level in excess of 0.1% by weight.

6. A soluble food powder having added thereto volatile-containing particles of claim 5 in from 0.01 to 2% by weight of the powder.

10

# 0 037 675

7. A soluble food powder according to claim 6 comprising either soluble coffee containing particles of soluble solids derived from roasted coffee containing coffee grinder gas aromatics or coffee essential oils or a foodstuff containing particles of a carbohydrate which is sucrose or dextrin loaded with carbon dioxide in excess of 5% by weight of particles.

8. A method of preparing edible, water-soluble or water-dispersible particles as claimed in any one of the preceding claims by

(1) dehydrating an aqueous solution and/or an aqueous dispersion of the edible material by spraying it into an anhydrous, water-miscible, organic solvent and thereafter removing solvent from the dehydrated material; or

(2) by spraying an aqueous solution and/or aqueous dispersion of the edible material, as particles having an average size below 0.2 mm (200 microns) and a solids content less than 40 wt.%, directly into an excess of a cryogenic liquid having a temperature below −100°C and thereafter freeze-drying the frozen particles without meltback; or

(3) when the solution or dispersion contains relatively insoluble but hydratable solids, spreading a layer, not more than 3.2 mm thick, of the solution or dispersion on a metal tray, pouring liquid nitrogen over said layer and freeze-drying the resulting frozen material without meltback.

9. A method according to claim 8 (2) wherein the cryogenic liquid is liquid nitrogen.

## Claims for the Contracting State: AT

1. A method of preparing edible, water-soluble or water-dispersible particles by

(1) dehydrating an aqueous solution and/or an aqueous dispersion of the edible material by spraying it into an anhydrous, water-miscible, organic solvent and thereafter removing solvent from the dehydrated material; or

(2) by spraying an aqueous solution and/or aqueous dispersion of the edible material, as particles having an average size below 0.2 mm (200 microns) and a solids content less than 40 wt.%, directly into an excess of a cryogenic liquid having a temperature below −100°C and thereafter freeze-drying the frozen particles without meltback; or

(3) when the solution or dispersion contains relatively insoluble but hydratable solids, spreading a layer, not more than 3.2 mm thick, of the solution or dispersion on a metal tray, pouring liquid nitrogen over said layer and freeze-drying the resulting frozen material without meltback.

2. A method according to claim 1 characterised in that the edible material is vegetable material.

3. A method according to either of claims 1 and 2 wherein the conditions of freezing and drying are controlled to produce a pore volume under 15 nm (150 angstroms) exceeding 20 microliters per gram.

4. A method according to any one of Claims 1 to 3 wherein the conditions of freezing and drying are selected to produce a pore volume under 5 nm (50 angstroms) exceeding 20 microliters per gram.

5. A method according to any one of the preceding claims wherein the edible material comprises soluble solids obtained from roasted coffee, from roasted chicory, from roasted wheat, a roasted blend of wheat and molasses, is a carbohydrate material selected from sugars, dextrins or corn syrup solids, or is a water dispersible gum, carbohydrate starch and/or protein.

6. A method according to any one of claims 1 to 5 wherein volatile compounds are added to the particles in an amount in excess of 0.1% by weight.

7. A method according to claim 6 wherein said volatile containing particles are added to a soluble food powder in from 0.01 to 2% by weight of the powder.

8. A method according to claim 7 wherein the soluble food powder comprises either soluble coffee containing particles of soluble solids derived from roasted coffee containing coffee grinder gas aromatics or coffee essential oils or a foodstuff containing particles of a carbohydrate which is sucrose or dextrin loaded with carbon dioxide in excess of 5% by weight of particles.

9. A method according to claim 1 (2) characterized in that the cryogenic liquid is liquid nitrogen.

## Patentansprüche für die Vertragsstaaten: BE CH DE FR GB IT LI LU NL SE

1. Trockene wasserlösliche Teilchen eines eßbaren Gutes, dadurch gekennzeichnet, daß die Teilchen eine spezifische Oberfläche von 20 bis 500 m²/g und eine mikroporöse Struktur haben, in der das Volumen von Mikroporen mit einem Radius unter 15 nm größer ist als 5 Mikroliter/g.

2. Teilchen nach Anspruch 1, dadurch gekennzeichnet, daß das Volumen der Poren unter 15 nm größer ist als 20 Mikroliter/g.

3. Teilchen nach Anspruch 1 oder 2, dadurch gekennzeichnet, daß das Volumen der Poren unter 5 nm größer ist als 20 Mikroliter/g.

4. Teilchen nach einem der Ansprüche 1 bis 3, dadurch gekennzeichnet, daß das eßbare Gut lösliche Feststoffe enthält, die aus geröstetem Kaffee, gerösteter Endivie, geröstetem Weizen oder einem gerösteten Gemisch von Weizen und Melasse gewonnen wurden, oder ein aus Zuckern, Dextrinen oder Maisstärkesirup gewonnenes Kohlenhydratgut oder ein in Wasser dispergierbarer Pflanzenschleim, eine in Wasser dispergierbare Stärke und/oder ein in Wasser dispergierbares Protein ist.

11

5. Teilchen nach einem der Ansprüche 1 bis 4, dadurch gekennzeichnet, daß sie mehr als 0,1 Gew.% flüchtige Verbindungen enthalten.

6. Lösliches Lebensmittelpulver mit einem Zusatz von flüchtige Stoffe enthaltenden Teilchen nach Anspruch 5 in einer Menge von 0,01 bis 2 Gew.% des Pulvers.

7. Lösliches Lebensmittelpulver nach Anspruch 6, das entweder löslichen Kaffee enthaltende Teilchen aus löslichen Feststoffen enthält, die aus geröstetem Kaffee gewonnen wurden, der Aromaten von in Kaffeemühlen verwendeten Gasen oder essentielle Kaffeeöle enthält, oder das ein Lebensmittel enthält, das Teilchen eines Kohlenhydrats enthält, das aus Saccharose oder Dextrin besteht, die bzw. das mit Kohlendioxid in einer Menge von mehr als 5 Gew.% der Teilchen beladen ist.

8. Verfahren zum Herstellen von wasserlöslichen oder in Wasser dispergierbaren, eßbaren Teilchen nach einem der vorhergehenden Ansprüche, dadurch gekennzeichnet, daß

(1) eine wäßrige Lösung und/oder eine wäßrige Dispersion des eßbaren Gutes durch Einsprühen in ein wasserfreies organisches Lösungsmittel entwässert und danach Lösungsmittel von dem entwasserten Gut entfernt wird, oder

(2) eine wäßrige Lösung und/oder eine wäßrige Dispersion des in Form von Teilchen mit einer durchschnittlichen Größe von weniger als 0,2 nm und mit einem Feststoffgehalt von weniger als 40 Gew.% vorliegenden Gutes direkt in einen überschüssige Menge einer Tieftemperaturflüssigkeit mit einer Temperatur unter −100°C gesprüht und danach die gefrorenen Teilchen gefriergetrocknet werden, ohne daß sie wieder aufschmelzen, oder

(3) im Falle einer Lösung oder Dispersion, die relativ unlösliche, aber hydratierbare Feststoffe enthält, die Lösung oder Dispersion unter Bildung einer Schicht in einer Dicke von nicht mehr als 3,2 nm auf eine Metallplatte aufgetragen wird, worauf Flüssigstickstoff auf die Schicht gegossen und das dadurch erhaltene gefrorene Gut gefriergetrocknet wird, ohne daß es wieder aufschmilzt.

9. Verfahren nach Anspruch 8 (2), dadurch gekennzeichnet, daß die Tieftemperaturflüssigkeit Flüssigstickstoff ist.

**Patentansprüche für den Vertragsstaat: AT**

1. Verfahren zum Herstellen von wasserlöslichen oder in Wasser dispergierbaren, eßbaren Teilchen dadurch gekennzeichnet, daß

(1) eine wäßrige Lösung und/oder eine wäßrige Dispersion des eßbaren Gutes durch Einsprühen in ein wasserfreies organisches Lösungsmittel entwässert und danach Lösungsmittel von dem entwässerten Gut entfernt wird, oder

(2) eine wäßrige Lösung und/oder eine wäßrige Dispersion des in Form von Teilchen mit einer durchschnittlichen Größe von weniger als 0,2 nm und mit einem Feststoffgehalt von weniger als 40 Gew.% vorliegenden Gutes direkt in einen überschüssige Menge einer Tieftemperaturflüssigkeit mit einer Temperatur unter −100°C gesprüht und danach die gefrorenen Teilchen gefriergetrocknet werden, ohne daß sie wieder aufschmelzen, oder

(3) im Falle einer Lösung oder Dispersion, die relativ unlösliche, aber hydratierbare Feststoffe enthält, die Lösung oder Dispersion unter Bildung einer Schicht in einer Dicke von nicht mehr als 3,2 nm auf eine Metallplatte aufgetragen wird, worauf Flüssigstickstoff auf die Schicht gegossen und das dadurch erhaltene gefrorene Gut gefriergetrocknet wird, ohne daß es wieder aufschmilzt.

2. Verfahren nach Anspruch 1, dadurch gekennzeichnet, daß das eßbare Gut pflanzliches Gut ist.

3. Verfahren nach Anspruch 1 und 2, dadurch gekennzeichnet, daß die Bedingungen beim Einfrieren und Trocknen so gesteuert werden, daß das spezifische Volumen der Poren unter 15 nm größer ist als 20 Mikroliter/g.

4. Verfahren nach einem der Ansprüche 1 bis 3, dadurch gekennzeichnet, daß die Bedingungen beim Einfrieren und Trocknen so gesteuert werden, daß das spezifische Volumen der Poren unter 5 nm größer ist als 20 Mikroliter/g.

5. Verfahren nach einem der vorhergehenden Ansprüche, dadurch gekennzeichnet, daß das eßbare Gut lösliche Feststoffe enthält, die aus geröstetem Kaffee, gerösteter Endivie, geröstetem Weizen oder einem gerösteten Gemisch von Weizen und Melasse gewonnen wurden, oder ein aus Zuckern, Dextrinen oder Maisstärkesirup gewonnenes Kohlenhydratgut oder ein in Wasser dispergierbarer Pflanzenschleim, eine in Wasser dispergierbare Stärke und/oder ein in Wasser dispergierbares Protein ist.

6. Verfahren nach einem der Ansprüche 1 bis 5, dadurch gekennzeichnet, daß den Teilchen flüchtige Verbindungen in einer Menge von mehr als 0,1 Gew.% zugesetzt werden.

7. Verfahren nach Anspruch 6, dadurch gekennzeichnet, daß die genannten, flüchtige Stoffen enthaltenden Teilchen einem löslichen Lebensmittelpulver in einer Menge von 0,01 bis 2 Gew.% des Pulvers zugesetzt werden.

8. Verfahren nach Anspruch 7, dadurch gekennzeichnet, daß das lösliche Lebensmittelpulver entweder löslichen Kaffee enthaltende Teilchen aus löslichen Feststoffen enthält, die aus geröstetem Kaffee gewonnen wurden, der Aromaten von in Kaffeemühlen verwendeten Gasen oder essentielle Kaffeeöle enthält, oder ein Lebensmittel enthalt, das Teilchen eines Kohlenhydrats enthält, das aus Saccharose oder Dextrin besteht, die bzw. das mit Kohlendioxid in einer Menge von mehr als 5 Gew.% der Teilchen beladen ist.

**0 037 675**

9. Verfahren nach Anspruch 1 (2), dadurch gekennzeichnet, daß die Tieftemperaturflüssigkeit Flüssigstickstoff ist.

**Revendications pour les Etats Contractants: BE CH DE FR GB IT LI LU NL SE**

1. Particules solubles dans l'eau, sèches, d'une matière comestible, caractérisées en ce que lesdites particules possèdent une aire superficielle de 20 à 500 m$^2$/g et une structure microporeuse dans laquelle le volume de pores des micropores ayant un rayon inférieur à 15 nm (150 Å) est supérieur à 5 microlitres par gramme.

2. Particules selon la revendication 1, caractérisées en ce que le volume des pores inférieur à 15 nm (150 Å) est supérieur à 20 microlitres par gramme.

3. Particules selon l'une des revendications 1 ou 2, caractérisées en ce que le volume de pores inférieur à 5 nm (50 Å) est supérieur à 20 microlitres par gramme.

4. Particules selon l'une quelconque des revendications 1 à 3, caractérisées en ce que la matière comestible comprend des matières solides solubles obtenues à partir de café torréfié, de chicorée torréfiée, de blé grillé, d'un mélange grillé de blé et de mélasse, est un glucide choisi parmi les sucres, les dextrines ou les solides de sirop de blé, ou est une gomme pouvant être dispersée dans l'eau, de l'amidon et/ou une protéîne.

5. Particules selon l'une quelconque des revendications 1 à 4, caractérisées en ce qu'elles contiennent des composés volatils à raison de plus de 0,1% en poids.

6. Poudre comestible soluble à laquelle on a ajouté des particules contenant des produits volatils de la revendication 5 à raison de 0,01 à 2% en poids de la poudre.

7. Poudre comestible soluble selon la revendication 6 comprenant soit du café soluble contenant des particules de matières solides solubles obtenues à partir de café torréfié contenant des substances aromatiques de gaz de moulin à café ou des huiles essentielles de café ou une denrée alimentaire contenant des particules d'un glucide qui est du saccharose ou de la dextrine chargé de gaz carbonique à raison de plus de 5% en poids des particules.

8. Procédé de préparation de particules comestibles solubles dans l'eau ou pouvant être dispersées dans l'eau, caractérisé en ce que:

(1) on déshydrate une solution aqueuse et/ou une dispersion aqueuse de la matière comestible en la pulvérisant dans un solvant organique anhydre, miscible avec l'eau, et en éliminant ensuite le solvant de la matière déshydratée; ou

(2) on pulvérise une solution aqueuse et/ou une dispersion aqueuse de la matière comestible, sous forme de particules ayant une grosseur moyenne inférieure à 0,2 mm (200 microns) et une teneur en solides inférieure à 40% en poids, directement dans un excès d'un liquide cryogénique ayant une température inférieure à −100°C et l'on lyophilise ensuite les particules congelées sans refusion; ou

(3) quand la solution ou dispersion contient des solides relativement insolubles mais hydratables, on étale en une couche de pas plus de 3,2 mm d'épaissieur la solution ou la dispersion sur un plateau métallique, on verse de l'azote liquide sur ladite couche et l'on lyophilise la matière congelée résultante sans refusion.

9. Procédé selon la revendication 8 (2), caractérisé en ce que le liquide cryogénique est de l'azote liquide.

**Revendications pour l'Etat Contractant: AT**

1. Procédé de préparation de particules comestibles solubles dans l'eau ou pouvant être dispersées dans l'eau, caractérisé en ce que:

(1) on déshydrate une solution aqueuse et/ou une dispersion aqueuse de la matière comestible en la pulvérisant dans un solvant organique anhydre, miscible avec l'eau, et en éliminant ensuite le solvant de la matière déshydratée; ou

(2) on pulvérise une solution aqueuse et/ou une dispersion aqueuse de la matière comestible, sous forme de particules ayant une grosseur moyenne inférieure à 0,2 mm (200 microns) et une teneur en solides inférieure à 40% en poids, directement dans un excès d'un liquide cryogénique ayant une température inférieure à −100°C et l'on lyophilise ensuite les particules congelées sans refusion; ou

(3) quand la solution ou dispersion contient des solides relativement insolubles mais hydratables, on étale en une couche de pas plus de 3,2 mm d'épaisseur la solution ou la dispersion sur un plateau métallique, on verse de l'azote liquide sur ladite couche et l'on lyophilise la matière congelée résultante sans refusion.

2. Procédé selon la revendication 1, caractérisé en ce que la matière comestible est de la matière végétale.

3. Procédé selon la revendication 1 ou 2, caractérisé en ce que l'on régle les conditions de congélation et séchage de façon à obtenir un volume de pores de moins de 15 nm (150 Å) dépassant 20 microlitres par gramme.

4. Procédé selon l'une quelconque des revendications 1 à 3, caractérisé en ce qu'on choisit les

13

**0 037 675**

conditions de congélation et de séchage de façon à obtenir un volume de pores de moins de 5 nm (50 Å) dépassant 20 microlitres par gramme.

5. Procédé selon l'une quelconque des revendications précédentes, caractérisé en ce que la matière comestible contient des solides solubles obtenus à partir de café torréfié, de chicorée torréfiée, de blé grillé, d'un mélange grillé de blé et de mélasse, et est un glucide choisi parmi les sucres, les dextrines ou les solides de sirop de blé ou est une gomme, un amidon de glucide et/ou une protéine pouvant être dispersés dans l'eau.

6. Procédé selon l'une quelconque des revendications 1 à 5, caractérisé en ce qu'on ajoute les composés volatils aux particules à raison de plus de 0,1% en poids.

7. Procédé selon la revendication 6, caractérisé en ce qu'on ajoute lesdites particules contenant des composés volatils à une poudre d'aliment soluble à raison de 0,01 à 2% en poids de la poudre.

8. Procédé selon la revendication 7, caractérisé en ce que la poudre d'aliment soluble est soit du café soluble contenant des particules de solides solubles obtenus à partir de café torréfié contenant des substances aromatiques de gaz de moulin à café ou des huiles essentielles de café, soit une denrée alimentaire contenant des particules d'un glucide qui est du saccharose ou de la dextrine chargé de gaz carbonique à raison de plus de 5% en poids rapporté aux particules.

9. Procédé selon la revendication 1 (2), caractérisé en ce que le liquide cryogénique est de l'azote liquide.

14